# EUROPEAN PATENT APPLICATION

(11) **EP 1 720 112 A2**
(43) Date of publication of application: **08.11.2006**
(21) Application number: 05019252.5
(22) Date of filing: 05.09.2005
(51) Int. Cl.: G06F 21/20, H04L 29/06

(54) **Stateful stack inspection for an anit-virus and anti-intrusion firewall system**

(30) Priority: 03.05.2005 US 908220
(71) Applicant: DrayTek Corp., Hsin-Chu Industrial Park, Hsin-Chu, Hsien (TW)
(72) Inventor: Yang, Tzu-Jian, Hsinchuang City Taipei Hsien (TW)
(74) Representative: Weber, Joachim

(57) **Abstract**

A network traffic scanner and firewall system inspects packets for malicious contents. The system uses a stateful stack inspection method to scan network traffic at multiple levels in varying manners appropriate to the content of the traffic. The system analyzes data streams, data packages, and package contents, as well as decoding and decrypting data when applicable, to determine whether the data are malicious.

## Description

The present invention relates to a method for a computer firewall according to the pre-characterizing clause of claim 1.

With the proliferation of networked computer systems, criminals and vandals have gone high-tech to ply their trade. Computer systems, particularly those on networks, are routinely infiltrated by malicious software programs, sometimes called "malware", such as viruses, Trojan horse programs, worms, backdoors, zombieware, adware, spyware, keystroke loggers, disk scanners, and so forth, whose purposes range from simple mayhem to information theft to network disruption. These programs arrive via many different routes: the user may download a program believing it to be a useful application, only to discover, too late, that it is a malicious program; an electronic mail attachment appearing to be from a friend might have been sent by a hacker or a hacker's tools; a flaw in the computer's operating system or network-enabled application can leave an exploitable "hole" open for a knowledgeable attacker to break in through. Naturally, a counter-effort has developed to provide tools to detect, block, neutralize, and/or remove such software, to protect the security and integrity of people's computers and personal data.

Early antivirus software was developed to scan files for virus signatures, such as code fragments that match known viruses. This type of protection is geared to detection after the system has already been compromised. While it works well in this regard, antivirus software is inherently designed to work on entire files and does not provide real-time monitoring of network traffic to protect the modern networked computer against attacks. Moreover, antivirus software inherently provides no protection against network attacks designed to penetrate flaws in the operating system, said flaws which on a networked computer allow hackers to install malicious software or issue commands remotely.

To protect against network intrusion in real time, software firewalls were subsequently developed. Application proxy firewalls, which include content inspection technology, are well known in the art. These software packages scan downloaded files and email attachments as they arrive for "signatures" and code segments of known malicious software. Files are completely downloaded into a quarantined area, scanned for virus signatures, are optionally cleaned of viruses, and may then be either blocked or passed on to the application programs. This has several disadvantages, including slowed performance, download size limits, and the need to keep empty disk space set aside for the firewall software's quarantined area.

Some software firewalls are capable of stateful packet inspection (SPI). This allows inspection of the packet header. Other software firewalls are capable of deep packet inspection. This allows inspection of the contents of packets to look for virus signatures, but it is limited in that the method does not delve into the structure of packet contents. A worm using a compressed file would be able to pass through, since the traditional firewall technology does not extend to decompressing the packet data and inspecting the decompressed contents.

Hardware firewalls have similar issues and more limitations. These are externally-attachable devices which provide the same features as software firewalls, but offload the computational load to a separate device. They have limited internal storage and thus provide the same disadvantages as software firewalls regarding download size limits and slowed performance. Unlike a software firewall, increasing available storage for a hardware firewall involves buying new hardware, if it is possible at all.

Because of these limitations and performance problems of the prior art, it is desirable to develop a better firewall.

This in mind, the present invention aims at providing a method for a computer firewall that reduces performance bottlenecks by scanning network traffic in a near-real-time manner and eliminates file size limitations on incoming traffic by performing the actions of a firewall without the use of the application proxy.

This is achieved by a method for a computer firewall according to claim 1. The dependent claims pertain to corresponding further developments and improvements.

As will be seen more clearly from the detailed description following below, the claimed method for a computer firewall includes steps of creating a state machine for managing a plurality of states, creating the plurality of states for tracking the data analysis of the network packets, and performing data analysis on the network packets.

In the following, the invention is further illustrated by way of example, taking reference to the accompanying drawings. Thereof
Fig.1 is a block diagram showing a high-level overview of a method for providing a firewall according to the present invention,
Fig.2 is a flowchart showing a state engine of the method for providing a firewall according to the present invention,
Fig.3 is a block diagram showing an overview of the present invention firewall method compared against the prior-art firewall and antivirus methods, and against the prior-art OSI model,
Fig.4 is a block diagram showing a high-level overview of a firewall according to the present invention,
Fig.5 is a flowchart showing a package method of the firewall according to the present invention,
Fig.6 is a flowchart showing a decode method of the firewall according to the present invention,
Fig.7 is a flowchart showing a data method of the firewall according to the present invention, and
Fig.8 is a flowchart showing a decrypt method of the firewall method according to the present invention

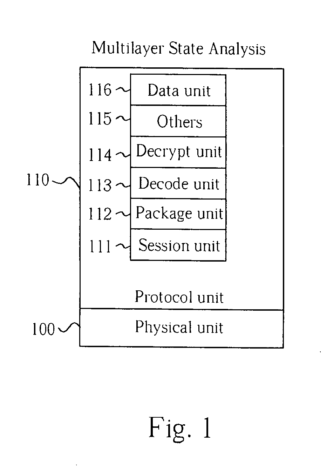

Please refer to Fig.1, which is a block diagram showing a high-level overview of a method for providing a firewall according to the present invention. The method comprises content/application inspection of network traffic through a number of units. The network traffic is transmitted through the physical layer 100, similar to the physical layer of the seven-layer OSI (Open System Interconnect) basic reference model of networking, as defined by the International Organization for Standardization (ISO) and incorporated herein by reference. Inside a protocol unit 110, multiple layers of inspection take place, including a session unit 111, a package unit 112, a decode (or decoder) unit 113, a decrypt (or decryption) unit 114, an other unit 115, and a data unit 116. Each layer (or unit) can inspect data and pass it along via preserving the sub-state by itself, or can refer it deeper into the next layer for further processing.

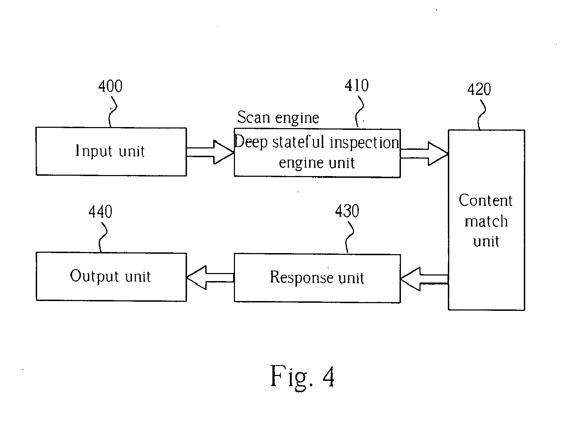

Please refer to Fig.4, which is a block diagram showing a high-level overview of a firewall according to the present invention. The present invention comprises an input unit 400 and an output unit 440. Between the input and output units 400, 440, data is collected and scanned as it arrives. A scan engine comprises a stateful stack inspection engine unit 410 to extract the plain data from packets and manage a search within incoming data; a content match unit 420 to do the actual matching of virus signatures with the data, no matter whether the matching method is based on software or hardware; and a response unit 430 to perform any actions necessary on the data, such as removing viruses or stopping incoming streams. At the input unit 400, data are collected from a network and controlled to be in sequential order before being sent into the stateful stack inspection engine unit 410.

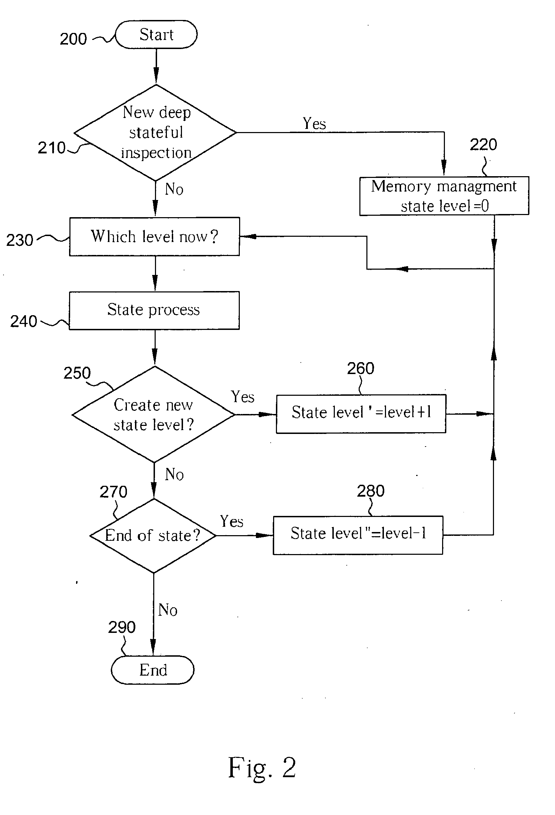

Please refer to Fig. 2, which is a flowchart showing operations performed by the stateful stack inspection engine unit 410 of Fig.4. The process includes the following steps:
Step 200: Start;
Step 210: Test whether this is a new stateful stack inspection. When not a new stateful stack inspection, proceed to step 230, otherwise proceed to step 220;
Step 220: Create a new state and set the state level to zero (i.e. the top level);
Step 230: Determine at which level the current state processing is;
Step 240: Perform processing for the current state;
Step 250: Determine whether the state level needs to be increased to process a new level of information; when it does not, proceed to step 270, otherwise proceed to step 260;
Step 260: Increase the state level by one, and return to step 230;
Step 270: Determine whether the state is ending; when the state is not ending, proceed to step 290, otherwise proceed to step 280;
Step 280: Decrease the state level by one, and return to step 230;
Step 290: End.

The units, namely the session unit 111, package unit 112, decode unit 113, decrypt unit 114, other unit 115, and data unit 116 shown in Fig. 1, are instantiations of the sub-states, i.e., a given state is used to track the processing of the method, while the units actually carry out the processing (i.e. data analysis for virus signatures). Thus, for example, in step 240 in the above method, the package unit 112 can process one or more package states for one or more specific package-related tasks, which are termed states.

In the method of Fig.2, the steps shown can be performed in sequences other than that indicated, and the method can further include other intermediate steps. Specifically, the positions of the steps 260 and 280 can be exchanged.

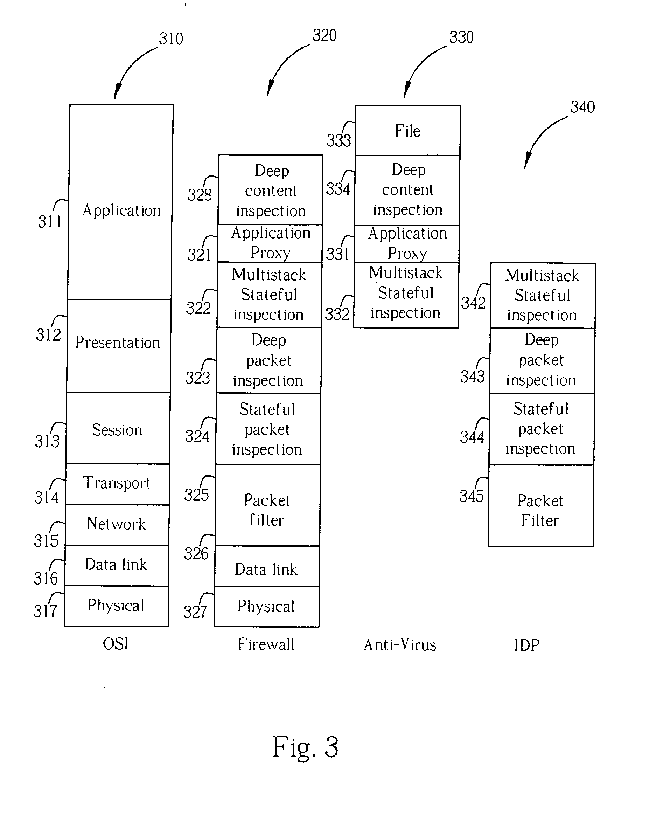

Please refer to Fig.3, which is a block diagram showing an overview of the present invention firewall method compared against the prior-art firewall and antivirus methods, and against the prior-art OSI mode. The OSI model 310 has seven layers: an application layer 311, where user programs send and receive data; a presentation layer 312, which standardizes formats between different machine architectures; a session layer 313, which handles connection protocols; a transport layer 314, which manages error correction and data coordination; a network layer 315, which handles addressing of data between hosts; and a data link layer 316 and physical layer 317 which are at the level of electrical signaling of the hardware.

Continuing with Fig.3, prior-art firewalls 320 deal with data at all levels. When integrated into hardware, hardware firewalls have physical layer 327 and data link layer 326 components. Both hardware and software firewalls engage in packet filtering 325 at the transport layer 314 and network layer 315 levels; they also engage in stateful packet inspection 324 at the session layer 313 level, and deep packet inspection 323 and multistack stateful inspection 322 across the presentation layer 312 level. At the application layer 311 level, prior-art firewalls 320 engage in deep content inspection 328 as well. The core of these prior-art firewalls 320 is the application proxy layer 321 in the application layer 311 level, wherein the firewalls 320 gather the full contents of a file before scanning it for viruses, Trojans, and other malware. The present invention, multistack stateful inspection 322, is at the presentation layer 312 level or application layer 311, even both. The present invention, can preserve the advantages of the SPI firewall and provide more secure functionality, and also improve the performance issue for the application proxy firewall.

Again in Fig.3, prior-art antivirus software 330 deals with data only at the top levels of networking. For a file 333, desktop antivirus software 330 scans the virus directly. For deep content inspection methods 334 at the application layer 311 level, an antivirus gateway can scan the virus after proxying 331 reassembles the fully-downloaded files from the network. The present invention stateful stack inspection 332 scans the virus at the presentation layer 312 level without reassembling the fully-download files, and thus, it has improved performance issue over application proxy-file based antivirus gateways.

Intrusion detection and prevention (IDP) method 340, as shown in Fig.3, does not use a application proxy. Instead, IDP 340 engages in deep packet inspection 343, stateful packet inspection 344, and packet filtering 345 thereby covering layers 312~315 of the OSI model 310. Specifically, deep packet inspection 343 can be performed at the presentation layer 312 level, stateful packet inspection 344 can be performed at the session layer 313 level, and packet filtering 345 can be performed at the transport 314 and network 315 layer levels. In an IDP, the present invention stateful stack inspection 332 can provide more accurate detection by, for instance, scanning compressed or encoded data.

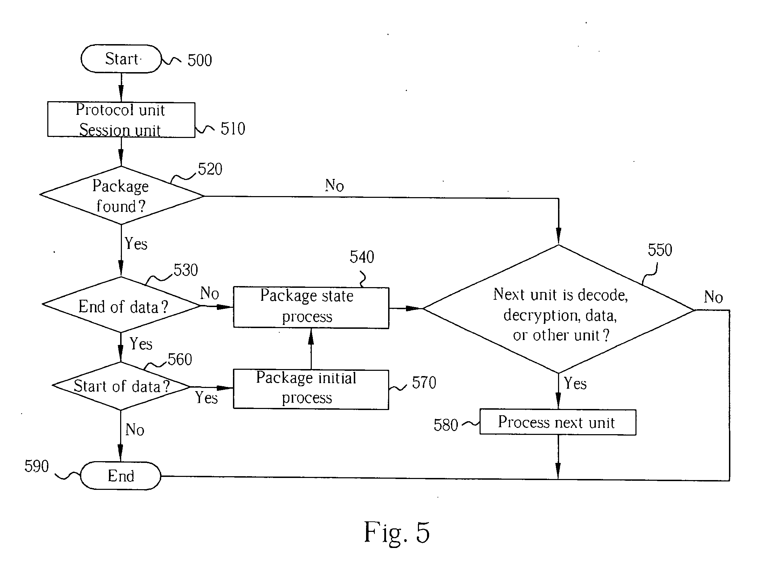

Please refer to Fig.5, which shows a flowchart of a package method of the firewall according to the present invention. The package method can be embodied in the package unit 112 of Fig.1. The net result of the operations in this method is to detect package boundaries and identify individual sections of the stream for analysis. The package method includes the following steps:
Step 500: Start;
Step 510: The method can be entered from the protocol unit 110 or the session unit 111;
Step 520: Is a package found? If a package has been found perform step 530, otherwise perform step 550;
Step 530: Has the end of data been reached? If this is the end of data, perform step 560, otherwise perform step 540;
Step 540: Perform a package state process which depends on the type of the package;
Step 550: If the next unit is a decode unit 113, a decrypt unit 114, a data unit 116, or an other unit 115, perform step 580, otherwise perform step 590;
Step 560: Is this the start of the data? If this is the start of the data, perform step 570, otherwise perform step 590;
Step 570: Perform an initial package process;
Step 580: Process the next unit;
Step 590: End.

The package method of Fig. 5 can be used for MIME (Multipurpose Internet Mail Extensions) and HTTP packages, as well as other well-known types of packages. The package state process of step 540 and initial package process 570 are well known in the art. The steps shown can be performed in sequences other than that indicated, and the method can further include other intermediate steps.

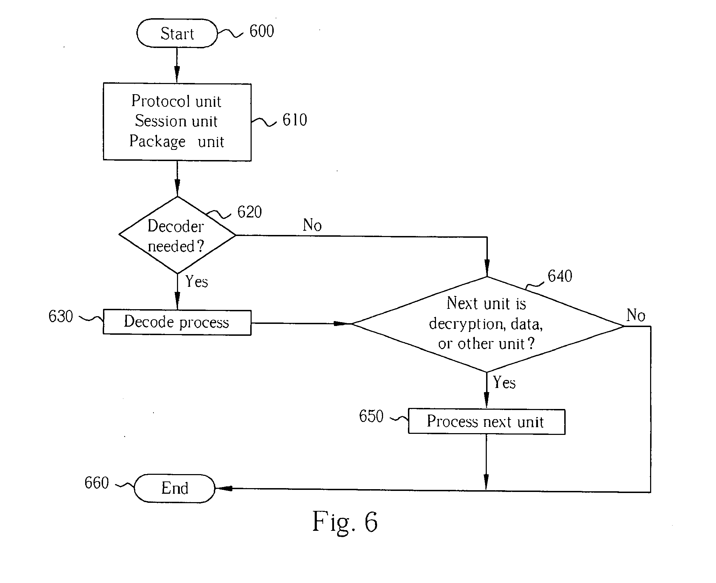

Please refer to Fig.6, which shows a flowchart of a decode method of the firewall according to the present invention. The decode method can be embodied in the decode unit 113 of Fig.1. The net result of the operations in this method is to decode encoded information so that it can be properly inspected. The decode method includes the following steps:
Step 600: Start;
Step 610: The method can be entered from the protocol unit 110, the session unit 111, or the package unit 112;
Step 620: Determine if a decoder is needed. If decoding is needed perform step 630, otherwise perform step 640;
Step 630: Perform a decoding process;
Step 640: If the next unit is a decrypt unit 114, a data unit 116, or an other unit 115, perform step 650, otherwise perform step 660;
Step 650: Process the next unit;
Step 660: End.

In the decode method of Fig. 6, various encodings are possible, including Base64 which is frequently used in MIME, Quoted-Printable used in some electronic mail packages, UU (UNIX-to-UNIX) encoding, and other well-known schemes. Once identified, the system can continue and perform data analysis or content matching. Moreover, the steps shown can be performed in sequences other than that indicated, and the method can further include other intermediate steps.

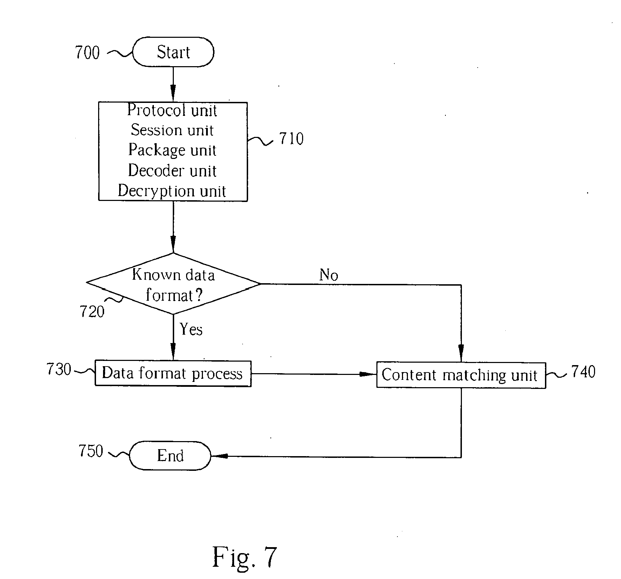

Please refer to Fig.7, which is a flowchart showing a data method of the firewall according to the present invention. The data method can be embodied in the data unit 116 of Fig. 1. The net result of the operations in this method is to inspect data. The data method includes the following steps:
Step 700: Start;
Step 710: The method can be entered from the protocol unit 110, the session unit 111, the package unit 112, the decode unit 113, or the decrypt unit 114;
Step 720: Is the data format known? If the data format is known perform step 730, otherwise perform step 740;
Step 730: Perform a data format process;
Step 740: Perform content matching at a content matching unit;
Step 750: End.

If able to identify the data format, the method processes data with an appropriate processor such as OLE2 (Microsoft Object Linking and Embedding, second version) or decompression (step 730). Decompression can include such standard formats as ZIP, Gzip, and BZ2. If unable to identify the data format, the method processes content matching at a unit such as the content match unit 420 of Fig.4. Such a content matching unit typically combs through data looking for viruses, Trojans, and other intrusion attempts and performs appropriate actions when such undesired items are found, comprising modifying the data, deleting the data, or terminating the session. If no undesired items are found, the firewall takes no action and allows the data to pass through unchanged. The steps shown above can be performed in sequences other than that indicated, and the method can further include other intermediate steps.

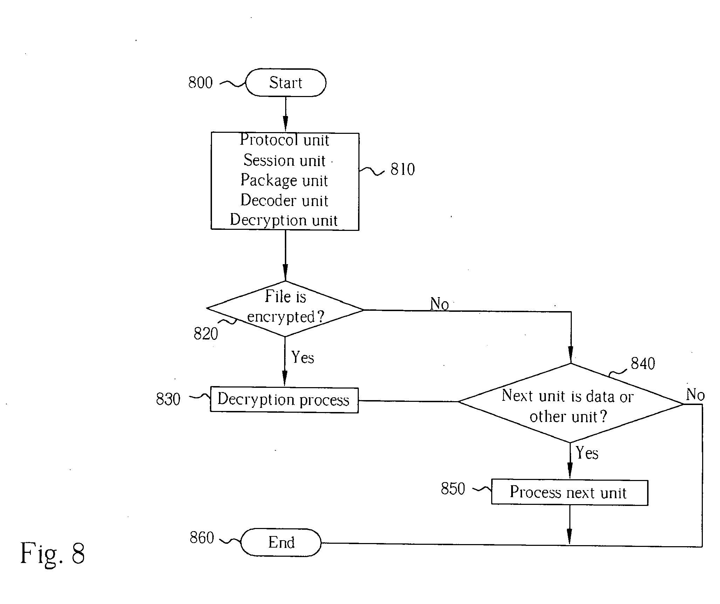

Please refer to Fig.8, which is a flowchart showing a decrypt method of the firewall according to the present invention. The decrypt method can be embodied in the decrypt unit 114 of Fig.1. The decrypt method includes the following steps:
Step 800: Start;
Step 810: The method can be entered from the protocol unit 110, the session unit 111, the package unit 112, the decode unit 113, or the decrypt unit 114;
Step 820: Is the file encrypted? If the file is encrypted perform step 830, otherwise perform step 840;
Step 830: Perform a decryption process;
Step 840: If the next unit is a data unit 116 or an other unit 115, perform step 850, otherwise perform step 860;
Step 850: Process the next unit;
Step 860: End.

In step 820, the method can decrypt data to inspect the content for malicious code. Cryptographic schemes that can be used include Data Encryption Standard (DES), Advanced Encryption Standard (AES), and the popular public key Rivest, Shamir, and Adleman (RSA) scheme. The steps shown above can be performed in sequences other than that indicated, and the method can further include other intermediate steps.

For a summary of which units can be entered from which units, please refer to Table 1.

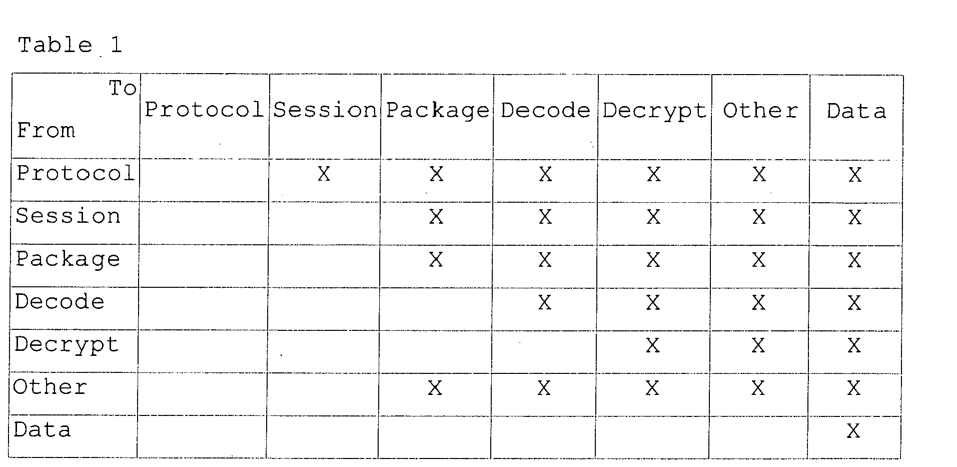

In Table 1, and "X" indicates that the unit listed at the top can be entered from the unit to the left. For example, from the package unit 112, the decode unit 113 can be entered, while the session unit 111 cannot. Also note that some units can be entered from themselves. Also note that the term "entered" is sometimes known as "called".

Referring back to Fig.4, the stateful stack inspection engine unit 410 creates new levels as necessary for inspecting a given data stream. When a new stream connects to the firewall, the stateful stack inspection engine unit 410 allocates a new state for the session unit 111. If the stream is MIME-packaged, the stateful stack inspection engine unit 410 creates a new sub-state for handling de-packaging using the package unit 112. As the packages are found, then when necessary, the stateful stack inspection unit 410 allocates sub-states for decoding the packages with the decode unit 113, which may in turn request that the stateful stack inspection engine unit 410 allocate a new sub-state to manage decryption with the decrypt unit 114. The decrypt unit may need to manage data with an other unit 115, and will cause the stateful stack inspection engine unit 410 to create a new sub-state for this purpose. The other unit 115 may determine that the data needs to be scanned for virus signatures, and cause the stateful stack inspection engine unit 410 to create a state for a data unit 116, which will then perform data analysis and virus signature matching.

All units are directly connected to the matching unit 420. Any unit can generate a virus match, and any unit can determine that data is safe and allow such data to pass through.

Each level is triggered only as necessary to inspect incoming data, and only those levels which are actually necessary are executed. This saves resources and speeds processing. Most important, data is managed as it arrives or departs, allowing the firewall to function without use of a application proxy, thus freeing the firewall from the limitations and performance bottlenecks that prior art application proxy firewalls and antivirus products are heir to. Thus the present invention achieves its objectives and improves the state of the art.

## Claims

1. A method for a computer firewall system comprising:
receiving a plurality of network packets;
passing a subset of the network packets according to results of data analysis; and
**characterised by**:
creating a state machine for managing a plurality of states;
creating the plurality of states for tracking the data analysis of the network packets; and
performing the data analysis on the network packets.

2. The method of claim 1 further **characterised by** sorting the network packets into a plurality of sessions, and in that creating the plurality of states comprises creating a state for tracking data analysis of each session.

3. The method of claim 1 **characterised in that** performing data analysis comprises determining whether the network packets contain package data, and **in that** creating the plurality of states comprises creating a state for tracking data analysis of each package datum when the network packets contain package data.

4. The method of claim 1 **characterised in that** performing data analysis comprises determining whether the network packets contain encoded data, and **in that** creating the plurality of states comprises creating a state for tracking data analysis of each encoded datum when the network packets contain encoded data.

5. The method of claim 1 **characterised in that** performing data analysis comprises determining whether the network packets contain encrypted data, and **in that** creating the plurality of states comprises creating a state for tracking data analysis of each encrypted datum when the network packets contain encrypted data.

6. The method of claim 1 **characterised in that** performing data analysis comprises determining whether the network packets contain matchable data, and **in that** creating the plurality of states comprises creating a state for tracking data analysis of each matchable datum when the network packets contain matchable data.

7. The method of claim 6 **characterised in that** performing data analysis comprises performing data analysis of the data by scanning the data for predetermined criteria, wherein the predetermined criteria comprise at least a first virus signature.

8. A method for of claim 1 wherein creating the plurality of states is **characterised by**:
when two of the network packets belong to different sessions, creating two session states for tracking data analysis of the network packets;
when a network packet contains package data, creating a package state for tracking data analysis of the network packets;
when a network packet contains encoded data, creating a decode state for tracking data analysis of the network packets;
when a network packets contains encrypted data, creating a decrypt state for tracking data analysis of the network packets; and
when a network packet contains data of a predetermined format, creating a data state for tracking data analysis of the network packets.

9. The method of claim 8 **characterised in that** performing data analysis comprises performing data analysis on the data of the packets by scanning the data for predetermined criteria, wherein the predetermined criteria comprise at least a virus signature.
